# FASCICULE DE BREVET EUROPEEN

(11) **EP 0 388 293 B1**
(45) Date de publication et mention de la délivrance du brevet: **05.10.1994**
(21) Numéro de dépôt: 90400678.0
(22) Date de dépôt: 14.03.1990
(51) Int. Cl.: F16H 7/12

(54) **Tendeur pour courroie de transmission de puissance**
Treibriemenspanner
Drive belt tensioning device

(30) Priorité: 17.03.1989 FR 8903512
(43) Date de publication de la demande: 19.09.1990
(73) Titulaire: HUTCHINSON S.A., F-75008 Paris (FR)
(72) Inventeur: Zermati, Charles, F-78310 Maurepas (FR); Bristot, Pierre, F-45200 Montargis (FR)
(74) Mandataire: Orès, Bernard

(56) Documents cités:
- EP-A- 0 243 237
- DE-U- 8 710 548
- US-A 4 790 801

## Description

L'invention a pour objet un tendeur pour courroie de transmission de puissance comme défini dans le préambule de la revendication 1. Un tel tendeur, comprenant un clapet de retenue et un espace intermédiaire entre un piston et un cylindre, est connu par US-A- 4 790 801.

Des tendeurs pour systèmes de transmission de puissance à courroie ont déjà été proposés, en particulier par la Demanderesse, dans FR-A-2 597 565 ou dans FR-A-2 612 591. Dans les réalisations selon ces documents, un tendeur linéaire pour courroie de transmission de puissance comprend un ressort de rappel associé à l'axe d'un galet tendeur avec lequel coopère la courroie pour commander le déplacement dudit galet sous l'action dudit ressort, lequel est enrobé d'élastomère formant une gaine limitant au moins une chambre à volume variable remplie d'un liquide, ladite chambre étant fermée à l'une de ses extrémités par un dispositif à clapet dont la traversée par le liquide pour rentrer dans, et/ou sortir de, ladite chambre, introduit un effet d'amortissement des vibrations susceptibles de prendre naissance dans la courroie. Si des dispositifs de ce type sont satisfaisants pour l'obtention des résultats recherchés, il s'est avéré que leur réalisation, en particulier en ce qui concerne la fabrication des gaines élastomères et la fixation de celles-ci à leurs extrémités, conduisait à des coûts de fabrication trop élevés pour des dispositifs destinés à être mis en oeuvre dans l'industrie automobile où le facteur prix est de grande importance.

Dans d'autres documents, par exemple dans FR-A-2 617 556 également au nom de la Demanderesse, est décrit un tendeur du type rotatif à ressort hélicoïdal exerçant un couple de rappel élastique et à organe souple de forme générale toroïdale divisé en deux chambres de fluide séparées à l'une de leurs extrémités par un clapet à fonctionnement dissymétrique pour introduire l'effet d'amortissement souhaité. La fabrication d'un tel dispositif est elle aussi, relativement onéreuse, d'une part, et conduit à un ensemble relativement encombrant, d'autre part.

Etant donné, cependant, que l'allongement naturel de la courroie au cours de son utilisation, de même que les vibrations engendrées dans la courroie par les irrégularités cycliques du régime moteur, s'accompagnent d'un glissement de la courroie sur les poulies des organes entraînés, -avec pour conséquence des défauts de transmission-, il importe de remédier à cet inconvénient des systèmes de transmission de puissance par courroie à l'aide d'un tendeur, rotatif ou linéaire suivant l'organisation du système de transmission de puissance par courroie mais qui, dans tous les cas, doit être d'un encombrement et d'un coût aussi faible que possible, tout en étant d'une grande sécurité et fiabilité.

C'est, par conséquent, un but de l'invention de fournir un tendeur pour courroie de transmission de puissance qui, tout en fournissant les mêmes résultats que les dispositifs connus, soit néanmoins beaucoup plus simple dans sa structure et, de ce fait, d'un moindre coût de fabrication.

C'est, aussi, un but de l'invention de fournir un tel tendeur de plus faible encombrement, notamment plus court que les dispositifs connus, et qui présente ainsi l'avantage de nécessiter moins d'espace pour sa mise en oeuvre, ce qui rend son application possible dans des cas où le volume disponible est limité, par exemple dans certains systèmes associés à des moteurs d'automobiles.

Un tendeur pour courroie de transmission de puissance selon l'invention, comprenant un galet tendeur avec lequel coopère la courroie, un ressort de rappel constitué par un ressort à boudin travaillant en compression et précontraint dans sa condition de repos pour commander le déplacement dudit galet lors d'une diminution de tension de la courroie, et des moyens d'amortissement des vibrations susceptibles de prendre naissance dans la courroie, le tendeur comportant deux chambres à volume variable contenant un liquide et communiquant entre elles à l'une de leurs extrémités par un dispositif à clapet, une desdites chambres étant à paroi déformable et ledit ressort de rappel étant associé à une desdites chambres,
est caractérisé
en ce que le dispositif de clapet établit une communication bidirectionelle entre les deux chambres qui sont remplies totalement de liquide,
en ce que ladite chambre à paroi déformable au moins est totalement limitée sur sa paroi latérale par une membrane en matériau élastomère comme du caoutchouc, ayant la forme générale d'une cloche, et
en ce que le ressort de rappel est associé à l'autre chambre.

Dans une forme de réalisation préférée, le ressort de rappel est solidaire par enrobage d'une gaine en matériau élastomère formant la paroi latérale de la chambre à laquelle il est associé et les extrémités de la gaine solidaire du ressort, de même que les extrémités de la membrane en forme générale de cloche sont fixées sur leurs organes de montage respectifs par sertissage.

En variante, les extrémités de la gaine solidaire du ressort, de même que les extrémités de la membrane en forme générale de cloche sont fixées sur leurs organes de montage respectifs par adhérisation lors de leur moulage.

On diminue ainsi de façon considérable le coût de fabrication des dispositifs selon l'invention par rapport aux réalisations de tendeurs connus qui comprennent pour leur montage des pièces usinées de fabrication onéreuse.

Dans un autre mode de réalisation, ladite autre chambre à laquelle est associé le ressort est formée par une paroi latérale qui est un tube rigide, non déformable, à l'intérieur duquel est logé ledit ressort.

D'autres caractéristiques et avantages de l'invention apparaîtront de la description qui suit, faite à titre d'exemple et en référence au dessin annexé dans lequel :
- la figure 1 est une vue très schématique d'un système de transmission de puissance par courroie ;
- la figure 2 est une vue schématique d'un tendeur suivant l'invention en coupe longitudinale pour une première forme de réalisation ;
- la figure 3 est une vue analogue à celle de la figure 2, mais pour une variante de réalisation ;
- la figure 4 est une vue analogue à celle des figures 2 et 3 mais pour une autre forme de réalisation ;
- la figure 5 est une vue schématique d'un autre mode d'exécution d'un tendeur selon l'invention ;
- la figure 6 est une vue analogue à celle de la figure 5 mais pour une variante de réalisation.

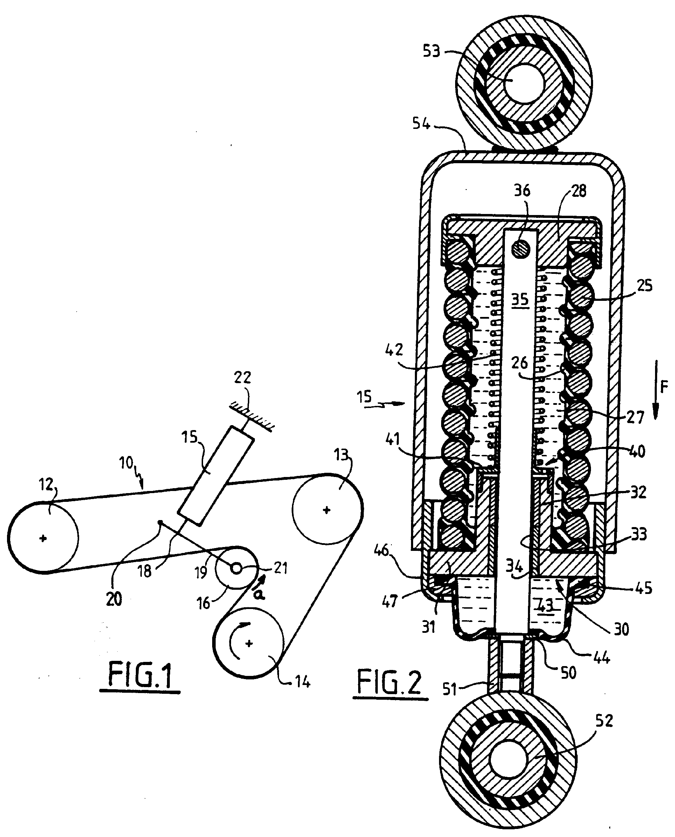

On se réfère d'abord à la figure 1 qui illustre, très schématiquement, un système de transmission de puissance dans lequel une courroie 10 coopère avec les flasques de poulies 12 et 13 solidaires en rotation d'arbres menés et avec les flasques d'une poulie 14, solidaire d'un arbre menant, par exemple le vilebrequin d'un moteur d'automobile, de camion, de machine agricole ou analogue. Pour assurer la tension de la courroie 10, on associe au système un tendeur 15, accroché en un point 18 d'un levier 19, monté à pivotement à une de ses extrémités autour d'un axe 20 et qui porte à son autre extrémité un galet 16 tourillonnant autour d'un axe 21. Le tendeur 15, dont l'extrémité opposée à celle du point d'attache au levier est fixée sur le bloc moteur, référencé schématiquement en 22, est destiné à ratraper l'allongement de la courroie 10 afin d'éviter le glissement de celle-ci par rapport aux flasques des poulies, d'une part et, d'autre part, à amortir les vibrations engendrées dans la courroie 10 par les irrégularités cycliques du régime moteur, en particulier au ralenti, ou lors des à-coups engendrés par la mise en route et/ou l'arrêt des appareillages entraînés par les arbres solidaires des poulies 12 et 13.

Conformément à l'invention, le tendeur 15, figure 2, comprend un ressort à boudin 25 solidaire par enrobage d'une gaine en matériau élastomère 26, par exemple en caoutchouc nitrile et qui forme la paroi latérale d'une première chambre 27 remplie de liquide. Ladite chambre, de forme générale cylindrique, est fermée à une de ses extrémités par un premier obturateur 28, solidarisé à étanchéité par adhérisation à l'ensemble formé par la gaine 26 et le ressort 25 lors du moulage de cet ensemble, tandis que l'autre extrémité de la chambre 27 est fermée par un second obturateur 30, de révolution, à section droite en T et qui présente ainsi un socle 31 à contour circulaire sur lequel est érigé un fût 32. Aussi bien le socle 31 que le fût 32 sont percés d'un alésage 33 assurant le guidage, de préférence avec interposition de bagues comme 34, d'une tige 35 solidaire à une de ses extrémités, par un axe 36, de l'obturateur 28.

Dans la chambre 27 est également logé, au voisinage de l'obturateur 30, un dispositif à clapet 40, illustré ici schématiquement sous forme d'une tête de clapet 41 sur laquelle s'exerce l'action d'un ressort de rappel 42, entourant la tige 35, ledit dispositif étant organisé pour permettre la circulation, avantageusement de façon dissymétrique, du liquide contenu dans la chambre 27, entre ladite chambre et une seconde chambre 43. Cette dernière est limitée latéralement par une paroi constituée par une membrane 44 en matériau élastomère, comme du caoutchouc, en forme générale de cloche, qui sert également de paroi de fond et dont le bord libre 45 est adhérisé au socle 31 et à un disque de serrage 47 coiffé par un chapeau 46. La zone de fond de la membrane 44, c'est-à-dire celle qui est la plus distante du socle 31, est percée d'un orifice de passage de la seconde extrémité de la tige 35 laquelle est rendue solidaire, par un montage étanche, montré schématiquement en 50, d'un court canon 51 solidaire d'un anneau 52 d'attache sur le levier 19.

Un anneau analogue, 53, est prévu à l'autre extrémité du tendeur, l'anneau 53 étant solidaire d'une cloche 54 dont la longueur est sensiblement celle du ressort 25 qu'elle enferme ainsi totalement ou partiellement en étant fixée, à sa partie opposée à l'anneau 53, sur le chapeau 46.

Le fonctionnement du tendeur, -ainsi démuni de ressort fonctionnant en traction comme dans les tendeurs connus et dans lequel le ressort 25 est un ressort agissant en compression, précontraint dans sa position de repos-, résulte immédiatement de ce qui précède : dès l'apparition d'une diminution de la tension de la courroie 10, le ressort 25 se détend, entraînant le déplacement de l'obturateur 28 et simultanément de la tige 35 dans le sens opposé à la flèche F avec passage concomittant du liquide de la chambre 43 à la chambre 27 lorsque la tête de clapet 41 se soulève. On obtient ainsi un amortissement faible qui permet au levier 19 et au galet 21 de pivoter rapidement dans le sens de la flèche a pour rattraper en un temps très bref la tension dans la courroie.

Si, par contre, la tension de cette dernière augmente, le levier 19 pivote en sens inverse de la flèche a et la tige 35 est déplacée dans le sens de la flèche F ; le liquide enfermé dans la chambre 27 gagne la chambre 43, sa traversée du clapet 40 provoquant un effet d'amortissement maximum.

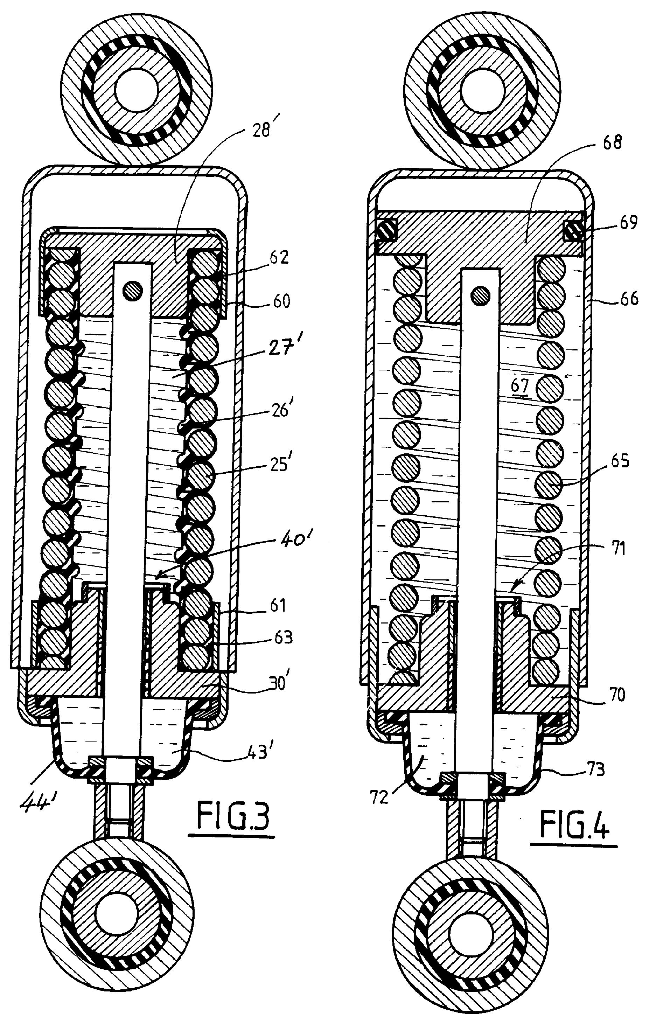

La structure du tendeur illustré sur la figure 3 est très proche de celle du tendeur montré sur la figure 2 et n'en diffère que par le fait que les obturateurs 28′ et 30′ limitant la chambre 27′ sont ici fixés sur le ressort 25′ et la gaine d'élastomère 26′ qui en est solidaire non pas par adhérisation mais par sertissage comme montré schématiquement en 60 et 61, les extrémités de la gaine d'élastomère 26′ étant façonnées suivant des manchons 62 et 63, respectivement, de plus grande longueur et de plus forte épaisseur que les parties d'extrémités correspondantes de la gaine 26 de la réalisation précédente pour permettre un sertissage satisfaisant.

Le fonctionnement de cette réalisation est identique à celui de la réalisation illustrée sur la figure 2, y compris en particulier en ce qui concerne le dispositif de clapet séparant la chambre 27′ de la chambre 43′ et qui n'est pas représenté intégralement sur la figure 3.

Dans la réalisation illustrée sur la figure 4 le ressort à boudin 65, -analogue aux ressorts 25 et 25′ des formes de réalisation précédentes-, n'est pas enrobé de matériau élastomère mais est logé dans un tube rigide et indéformable 66 formant la paroi latérale d'une chambre 67 remplie de liquide et qui est analogue aux chambres 27 et 27′ des réalisations précédentes. La chambre 67 est fermée à l'une de ses extrémités par un obturateur 68 monté à coulissement dans le tube 66 avec interposition entre ledit tube et l'obturateur d'un joint d'étanchéité 69 et l'autre extrémité de la chambre est fermée par un obturateur 70, analogue aux obturateurs 30 et 30′ des réalisations précédentes, et auquel est associé un clapet 71 analogue au clapet 40 de la réalisation selon la figure 2. Comme dans le tendeur illustré sur cette figure, le clapet 71 permet le passage du liquide contenu dans la chambre 67 vers une chambre 72, et vice-versa, ladite chambre 72 étant limitée par l'obturateur 70, d'une part, et une membrane en élastomère 73 en forme générale de cloche et qui est tout à fait semblable à la membrane 44 des réalisations précédentes.

Le fonctionnement de ce tendeur, dans lequel le ressort à boudin 65 précontraint dans sa position de repos est prévu pour travailler en compression uniquement, est tout à fait similaire à celui des formes de réalisations décrites en référence aux figures 2 et 3.

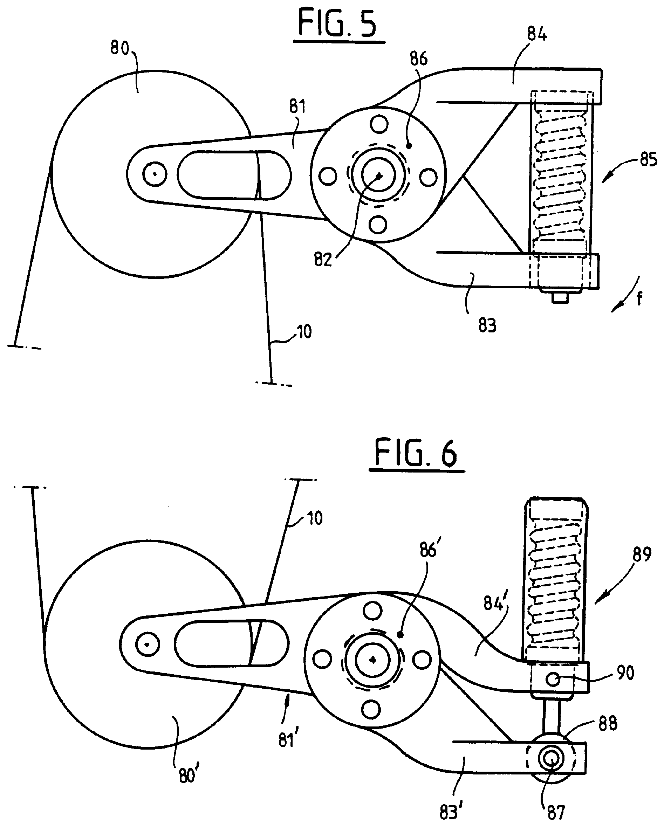

On se référe maintenant aux figures 5 et 6 qui montrent deux réalisations d'un tendeur très compact et particulièrement bien approprié pour le réglage de la tension de la courroie avec laquelle il coopère sans outils de montage et de mesure particuliers.

Dans la réalisation de la figure 5, le galet 80 destiné à coopérer avec la courroie 10 est monté tourillonnant à l'extrémité d'un bras coudé 81, évidé, mobile en rotation autour d'un axe 82, la partie 83 du bras 81 distante de celle portant le galet 81 étant en regard d'un bras 84. Entre ce dernier et la partie 83 est monté un dispositif 85 semblable aux dispositifs à ressort de compression, chambres de fluide et clapet qui viennent d'être décrits en référence aux figures 2 à 4. Après que le dispositif 85 dont le ressort a été précontraint ait été mis en place entre les extrémités des bras 81 et 84, lesdits bras sont immobilisés en rotation l'un par rapport à l'autre à l'aide d'une goupille 86 et le tendeur est rapporté sur le bloc moteur qu'il est destiné à équiper, pour amener le galet 80 au contact de la courroie 10, par rotation de l'ensemble du tendeur autour de l'axe 82 ; lorsque ce contact du galet et de la courroie est établi, le tendeur est fixé en position sur le bloc moteur par un moyen, non représenté, qui immobilise le bras 84 par rapport audit bloc moteur. La goupille 86 est alors retirée et le dispositif 85 devenant opératoire, le bras coudé 81 pivote autour de l'axe 82 dans le sens de la flèche f pour donner à la courroie 10 la tension souhaitée, déterminée par le taux de précontrainte imposée au ressort du dispositif 85. Le+ tendeur peut ainsi être mis en place sur une chaîne de montage sans outillage spécial et la tension initiale de la courroie être assurée sans outil de mesure particulier.

Lorsque, au cours du temps, apparaît une diminution de la tension de la courroie, la détente du ressort inclus dans le dispositif 85 provoque un mouvement de pivotement du levier 81 dans le sens de la flèche f, qui rattrape la tension de la courroie avec l'effet d'amortissement souhaité introduit par le dispositif à clapet séparant les deux chambres de fluide que comprend ledit dispositif 85.

Dans la réalisation selon la figure 6, semblable à celle qui vient d'être décrite immédiatement ci-dessus, le galet 80′ qui coopère avec la courroie 10 est montée tourillonnant à une extrémité d'un bras coudé 81′ analogue au bras 81 de la réalisation précédente mais dont la partie 83′ est articulée par un axe 87 sur un anneau 88 d'un dispositif 89 semblable au dispositif à ressort de compression, chambres de fluide et clapet décrit en référence aux figures 2 à 4. Le bras 84′, qui est celui fixé au bloc moteur après mise en place du dispositif, est relié par un axe 90 à l'enveloppe du dispositif 89, celui-ci étant alors monté en "traction" pour des applications dans des implantations exigeant d'inverser le sens de tension du galet par rapport à la réalisation selon la figure 5. Comme dans cette dernière réalisation, cependant, le tendeur est d'abord mis en place sur le bloc moteur avec une goupille 86′, -analogue à la goupille 86-, immobilisant l'un par rapport à l'autre les bras 81′ et 84′ puis après rotation autour de l'axe 82′ pour amener le galet 80′ au contact de la courroie 10, ladite goupille est retirée.

Dans l'une et l'autre réalisation décrites immédiatement ci-dessus, l'amortissement le plus faible correspond au sens de déplacement du galet tendeur 80 ou 80′ qui est celui pour lequel la courroie 10 se détend dans la boucle dudit galet, tandis que l'amortissement le plus fort est celui correspondant à une augmentation de la tension de la courroie.

## Revendications

1. Tendeur pour courroie de transmission de puissance comprenant un galet tendeur (16 ; 80 ; 80′) avec lequel coopère la courroie (10), un ressort de rappel constitué par un ressort à boudin (25 25′ 65) travaillant en compression et précontraint dans sa condition de repos pour commander le déplacement dudit galet lors d'une diminution de tension de la courroie, et des moyens d'amortissement des vibrations susceptibles de prendre naissance dans la courroie, le tendeur comportant deux chambres (27, 43 ; 27′, 43′ ; 67, 72) à volume variable contenant un liquide et communiquant entre elles à l'une de leurs extrémités par un dispositif à clapet (40 ; 40′; 71) , une desdites chambres étant à paroi déformable, et ledit ressort de rappel étant associé à une desdites chambres,
caractérisé
en ce que le dispositif de clapet établit une communication bidirectionelle entre les deux chambres qui sont remplies totalement de liquide,
en ce que ladite chambre à paroi déformable (43 ; 43′ 72) au moins est totalement limitée sur sa paroi latérale par une membrane (44 ; 44′ ; 73) en matériau élastomère, comme du caoutchouc, ayant la forme générale d'une cloche, et
en ce que le ressort de rappel est associé à l'autre chambre (27 ; 27′ ; 67).

2. Tendeur selon la revendication 1, caractérisé en ce que le ressort de rappel (25′) est solidaire par enrobage d'une gaine (26′) en matériau élastomère formant une paroi latérale de la chambre à laquelle il est associé et en ce que les extrémités de la gaine (26′) solidaire du ressort (25′), de même que les extrémités de la membrane (44′) en forme générale de cloche sont fixées sur leurs organes de montage respectifs par sertissage.

3. Tendeur selon la revendication 1, caractérisé en ce que le ressort de rappel (25) est solidaire par enrobage d'une gaine (26) en matériau élastomère formant une paroi latérale de la chambre à laquelle il est associé et en ce que les extrémités de la gaine (26) solidaire du ressort (25) de même que les extrémités de la membrane (44) en forme générale de cloche sont fixées sur leurs organes de montage respectifs par adhérisation lors de leur moulage.

4. Tendeur selon la revendication 1, caractérisé en ce que ladite autre chambre (67) à laquelle est associé ledit ressort de rappel (65) est formée par une paroi latérale (66) qui est un tube rigide, non déformable, à l'intérieur duquel est logé ledit ressort.

5. Tendeur selon la revendication 1, caractérisé en ce que le galet tendeur (80, 80′) est porté à l'extrémité d'un bras rotatif (81, 81′) dont l'autre extrémité est soumise à l'action dudit ressort à boudin travaillant en compression, desdites chambres à volume variable et dudit clapet.

## Patentansprüche

1. Spanner für einen Treibriemen einer Kraftübertragung, umfassend eine Spannrolle (16;80;80′), mit welcher der Treibriemen (10) zusammenwirkt, eine von einer Schraubenfeder (25;25′;65) gebildete Rückholfeder, die unter Kompression arbeitet und in ihrem Ruhezustand vorgespannt ist, um die Verlagerung der Rolle während einer Verminderung der Spannung des Treibriemens zu steuern, und Mittel zur Dämpfung von Vibrationen, die geeignet sind, in dem Treibriemen zu entstehen, wobei der Spanner zwei Kammern (27,43;27′,43′; 67,72) mit variablem Volumen hat, die eine Flüssigkeit enthalten und an einem ihrer Enden durch eine Ventileinrichtung (40;40′;71) verbunden sind, wobei eine der Kammern eine solche mit deformierbarer Wand ist und die Rückholfeder mit einer der Kammern verbunden ist,
dadurch **gekennzeichnet**,
daß die Ventilvorrichtung eine Zweirichtungsverbindung zwischen den beiden Kammern herstellt, die völlig mit Flüssigkeit gefüllt sind,
daß wenigstens die Kammer mit deformierbarer Wand (43;43′; 72) auf ihrer Seitenwand völlig durch eine Membrane (44;44′; 73) aus elastomerem Material, wie Kautschuk, begrenzt ist, welche die allgemeine Form einer Glocke hat, und
daß die Rückholfeder mit der anderen Kammer (27;27′;67) verbunden ist.

2. Spanner gemäß Anspruch 1, dadurch **gekennzeichnet**, daß die Rückholfeder (25′) durch Ummantelung mit einer Hülle (26′) aus elastomerem Material formschlüssig verbunden ist, die eine Seitenwand der Kammer bildet, mit welcher sie verbunden ist, und daß die Enden der Hülle (26′), mit der Feder (25′) formschlüssig verbunden, ebenso wie die Enden der Membrane (44′) in der allgemeinen Form einer Glocke auf ihren jeweiligen Montageorganen durch Einfassung befestigt sind.

3. Spanner gemäß Anspruch 1, dadurch **gekennzeichnet**, daß die Rückholfeder (25) durch Ummantelung mit einer Hülle (26) aus elastomerem Material formschlüssig verbunden ist, das eine seitliche Wand der Kammer bildet, mit welcher sie verbunden ist, und daß die Enden der Hülle (26), mit der Feder (25) formschlüssig verbunden, ebenso wie die Enden der Membrane (44) in der allgemeinen Form einer Glocke auf ihren jeweiligen Montageorganen durch Anhaftung während ihrer Formung verbunden werden.

4. Spanner gemäß Anspruch 1, dadurch **gekennzeichnet**, daß die andere Kammer (67), mit welcher die Rückholfeder (65) verbunden ist, von einer seitlichen Wand (66) gebildet ist, die ein starres, nicht-deformierbares Rohr ist, in deren Innerem die Feder untergebracht ist.

5. Spanner gemäß Anspruch 1, dadurch **gekennzeichnet**, daß die Spannrolle (80,80′) an dem Ende eines Dreharms (81,81′) gehalten ist, dessen anderes Ende der Wirkung der unter Kompression arbeitenden Schraubenfeder, der Kammern mit variablem Volumen und des Ventils unterworfen ist.

## Claims

1. A tensioner for tensioning a power-transmission belt, the tensioner including a tensioner wheel (16; 80; 80′) with which the belt (10) co-operates, a return spring constituted by a coil spring (25; 25′; 65) working under compression and pre-stressed in its rest state so as to cause said wheel to be displaced when the tension of the belt decreases, and means for damping any vibration that may occur in the belt, the tensioner further including two chambers (27, 43; 27′, 43′; 67, 72) having variable volumes, containing a liquid, and communicating with each other at respective ones of their ends via a valve device (40; 40′; 71), one of said chambers having a deformable wall, and said return spring being associated with one of said chambers;
said tensioner being characterized in that the valve device establishes both-way communication between the two chambers which are entirely filled with liquid;
in that said chamber (43; 43′; 72) having a deformable wall is delimited at least entirely over its side wall by a membrane (44; 44′; 73) that is made of elastomer, such as rubber, and that is bell-shaped in overall shape;
and in that the return spring is associated with the other chamber (27; 27′; 67).

2. A tensioner according to claim 1, characterized in that the return spring (25′) is secured to an elastomer sheath (26′) by being coated therewith, the sheath forming a sidewall of the chamber with which the spring is associated, and in that the ends of the sheath (26′) that is secured to the spring (25′), and the ends of the bell-shaped membrane (44′) are fixed to the respective members on which they are mounted by crimping.

3. A tensioner according to claim 1, characterized in that the return spring (25) is secured to an elastomer sheath (26) by being coated therewith, the sheath forming a sidewall of the chamber with which the spring is associated, and in that the ends of the sheath (26) that is secured to the spring (25), and the ends of the bell-shaped membrane (44) are fixed to the respective members on which they are mounted by bonding during molding.

4. A tensioner according to claim 1, characterized in that said other chamber (67) with which said return spring (65) is associated is formed by a side-wall (66) which is constituted by a non-deformable rigid tube inside which said spring is received.

5. A tensioner according to claim 1, characterized in that the tensioner wheel (80, 80′) is carried at one end of a pivot arm (81, 81′) whose other end is subjected to the action of said coil spring working in compression, of said chambers having variable volumes, and of said valve.
